# EUROPEAN PATENT SPECIFICATION

(11) **EP 0 268 689 B1**
(45) Date of publication and mention of the grant of the patent: **24.03.1993**
(21) Application number: 87903742.2
(22) Date of filing: 04.06.1987
(51) Int. Cl.: G01B 7/00, G01B 21/00, G01B 5/00

(54) **POSITION DETECTOR WITH RADIO TRANSMITTER AND RECEIVER**
POSITIONSDETEKTOR, BESTEHEND AUS RADIOSENDER UND RADIOEMPFÄNGER
DETECTEUR DE POSITION A EMETTEUR ET RECEPTEUR RADIO

(30) Priority: 05.06.1986 JP 131620/86
(43) Date of publication of application: 01.06.1988
(73) Proprietor: FUKUHISA, Norio, Kanazawa-shi Ishikawa 920 (JP)
(72) Inventor: FUKUHISA, Norio, Kanazawa-shi Ishikawa 920 (JP)
(74) Representative: Schmidt-Evers, Jürgen, Dipl.-Ing.
(86) International application number: PCT/JP87/00355
(87) International publication number: WO 87/07712

(56) References cited:
- EP-A- 0 223 970
- GB-A- 2 097 930
- JP-A- 587 509
- JP-A- 4 994 370
- JP-A-51 120 246
- JP-U-57 179 105
- US-A- 4 118 871

## Description

### TECHNICAL FIELD

The present invention relates to a position detector according to the preamble of claim 1.

A position detector of such kind is known, for example from US Patent No. 4118 871 and has an external contact formed of electrically-insulated needle and the detected object so that the contact between the needle and the work closes the external contact to produce a detecting signal.

Another position detector known from US Patent No 4153 998 has a needle which contacts with an object to be detected to detach its base portion from a seat surface keeping the static position of the needle so that it breaks the internal contact to produce a detecting signal.

The object of the invention according to claim 4 to provide a position detector having advantages brought about by both the above position detector having the internal contact and the above position detector having the external contact. Specifically, the position detector having the internal contact can detect the position of an object to be detected, independently of the property of the object to be detected, conductive or a non-conductive. This type of position detector, however, cannot actuate its internal contact without time delay after the detecting needle and the object to be detected are brought in contact with each other. There is then a strong possibility that various errors may occur. Thus, this internal contact type position detector produces measured values that are considerably made different as compared with the external contact type position detector. While, the position detector having the external contact can detect at high accuracy the position of the object made of conductive material but it cannot detect the position of the object made of non-conductive material. Therefore, the object of this invention is to solve these problems.

According to this invention a detecting needle 20 made of conductive material is attached to the detecting head 43 in an electrically-insulated fashion and to be freely movable in a three-dimensional manner and also biased to a predetermined static position. Also, the detecting head is provided with internal contacts 27 and 31 openable or closable when the detecting needle 20 moves from the static position. A first contact detecting circuit 45 including the external contact produces a first detecting signal A, for example, a signal of some specific frequency or amplitude. While, a second contact detecting circuit 47 including the internal contacts produces a second detecting signal B, for example, a signal having a frequency or amplitude different from that of the first detecting signal A. Then, the receiving side controller 80 is supplied with a different compensating value whether or not the first signal A is delivered prior to the second signal B, and calculates a measured value, thus the third object of this invention being achieved.

According to the above arrangement, if the object to be detected is made of conductive material, when the detecting needle 20 contacts with the object 42, the output current from the transmitter 50 flows through the detecting needle 20 to the object 42 and the main body of the machining tool, making the whole of the machining tool function as an antenna. Thus, irrespective of the position or rotation direction of the detecting head 43, the receiver 70 can positively receive the detecting signal of a predetermined level.

When the FM wave is employed as the carrier wave of the detecting signal and the detecting signal is modulated by the double scale signal and transmitted through radio wave, it is possible to completely remove such a risk that the position detector is affected or mis-operated by extraneous noise.

Further, according to the position detector having the internal contacts and the external contact, if the object to be detected is made of conductive material, when the object 42 and the detecting needle 20 are brought in contact with each other, the first detecting signal A is delivered and then the second detecting signal B is delivered with a small time delay from the first detecting signal. Therefore, the receiving side apparatus receives the first detecting signal A prior to the second detecting signal B to thereby detect that the work is made of conductive material. At that time, the measured value is corrected by giving the measured value calculated from an input time point s of the detecting signal to a corrected value registered as a correcting value for the external contact.

If on the other hand the object 42 is made of non-conductive material, the external contact does not function as the contact so that the second detecting signal B is produced first at the time when the internal contact is actuated. Therefore, the absence of the first detecting signal A makes it possible to decide that the object 42 is made of non-conductive material. At that time, the measured value is corrected by giving the measured value calculated from the input time point s of the detecting signal to a corrected value registered as a correcting value for the internal contact.

An advantage of this invention is the provision of a technique which can positively transmit a detecting signal by radio wave to a receiver located at a fixed position irrespective of the movement of the detecting head including the detecting needle and the transmitter.

This advantage is achieved by arranging the position detector so to supply a high frequency output from a transmitter for transmitting a detecting signal to a detecting needle itself which is mounted so as to detect an object to be detected. Referring to the reference numerals in the figures, the position detector of this invention comprises a detecting head 43 having electrical detecting means 45 and 47 for detecting the contact between a detecting needle 20 and an object 42 to be detected as an electrical signal and a radio transmitter 50 for transmitting the detected electrical signal, a radio receiver 70 for receiving the above signal and a controller 80 located at a fixed position, wherein the output from the radio transmitter 50 is supplied to the detecting needle 20 itself.

Another advantage of this invention is the provision of a position detector which can be prevented from being mis-operated when various extraneous noises are produced in the radio wave under the circumstances in which the position detector is operated.

This ether advantage can be achieved by the thus constructed position detector in which the carrier wave for the detecting signal, which is transmitted and received through radio wave, is made an FM wave and the signal delivered from the transmitter 50 is modulated by a double scale signal.

The drawings illustrate an embodiment of this invention, wherein Fig. 1 is a cross-sectional view illustrating a structure of a detecting head in greater detail, Fig. 2 is an exploded perspective view of a main portion showing a construction for supporting a detecting needle, Fig. 3 is an electrical block diagram of the transmitting side, Fig. 4 is an electrical block diagram of the receiving side, Fig. 5 is a schematic representation illustrating a signal produced when a work is made of conductive material, Fig. 6 is a schematic representation illustrating a signal produced when the work is made of non-conductive material and Fig. 7 is a schematic representation used to explain that the detecting signals rise at different timings.

In the figures, reference numeral 1 designates the head housing, 4 the battery, 8 the inside casing, 20 the detecting needle, 21 the supporting disk, 22 the insulating material, 23 the hemispherically-shaped protrusions, 24, 25 and 26 the seats, 27 the internal contact at the detecting needle side, 28 the insulating material, 31 the internal contact at the housing side, 33 the compression spring, 35 the auxiliary spring, 42 the object to be detected, 43 the detecting head, 45 the first detecting circuit, 47 the second detecting circuit, 50 the transmitter, 55 the double scale signal generator, 56 and 57 the signal terminals thereof, 70 the receiver, 77 the signal discriminating circuit and 80 the CNC apparatus for the machine tool.

### BEST MODE FOR CARRYING OUT THE INVENTION

An embodiment of this invention will hereinafter be described with reference to the drawings.

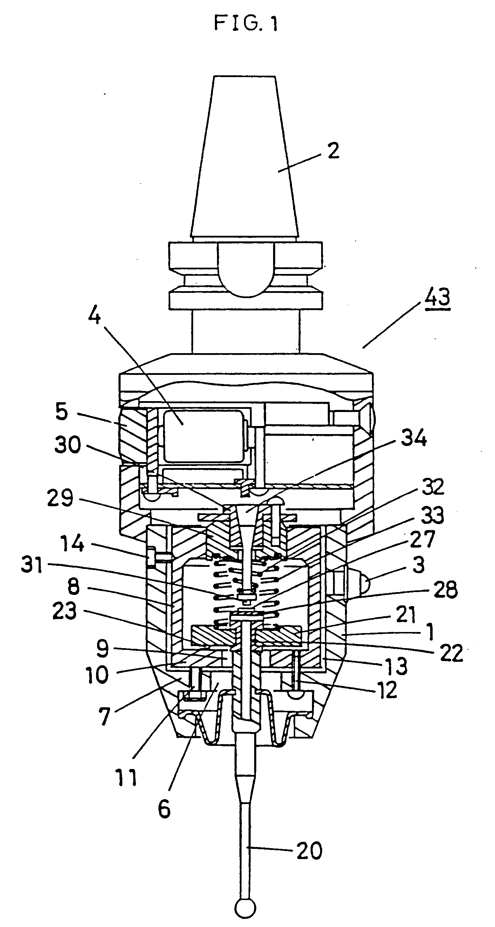

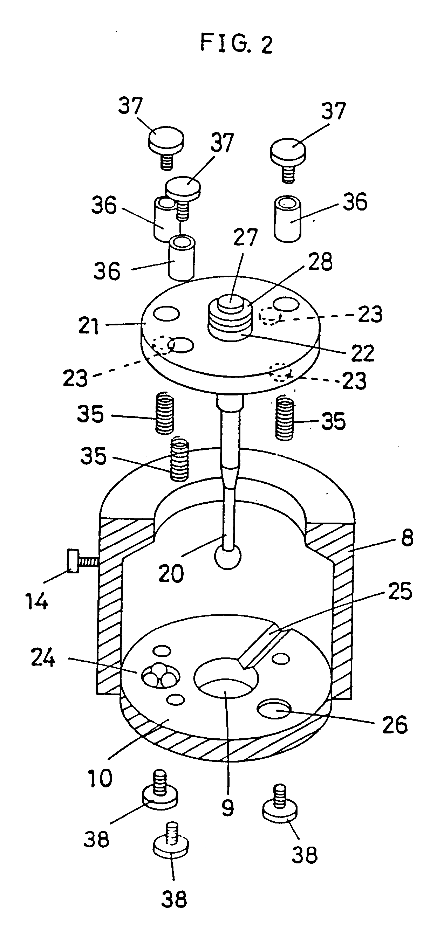

Referring to Figs. 1 and 2, a head housing 1 is provided with a shank 2 and a display LED 3. The head housing 1 incorporates therein a battery 4 and has a battery lid 5. The head housing 1 has a bottom plate 7 having an opening 6 formed through its center. An inside casing 8 has an opening 9 formed through the center of a bottom plate 10 of the inside casing 8. Three screw seats 11 are embedded on the bottom plate 7 of the head housing with an angular spacing of 120°. Three fastening screws 12 are screwed through the bottom plate 7 of the head housing to the bottom plate 10 of the inside casing so as to have a phase difference of 60° relative to the screw seats 11. The inside casing 8 is suppressed to the screw seats 11 by the fastening screws 12 and supported thereby and is built into the head housing 1 with a certain clearance 13 therebetween. Three fine adjusting screws 14 are secured to the cylindrical portion of the head housing with an angular spacing of 120° in an opposing relation to the cylindrical portion of the inside casing. These fine adjusting screws move the inside casing 8 to fine adjust the inclination of the detecting needle 20.

The detecting needle 20 is supported by a supporting disk 21 and an insulating material 22 is interposed between the detecting needle 20 and the supporting disk 21. The detecting needle 20 is secured to the supporting disk 21 and extended through the openings 9 and 6 to the outside of the head housing 1. Hemispherically-shaped protrusions 23 are implanted on the lower surface of the supporting disk 21 with an angular spacing of 120°. On the upper surface of the bottom plate 10 of the inside casing, there are formed a first seat 24 formed of three balls, a second V-shaped groove seat 25 and a third planar seat 26 in an opposing relation to the protrusions 23 as shown in Fig. 2. The internal contact 27 is secured to the base end portion of the detecting needle 20 through an insulating material 28.

A spring stop 29 is engaged with the inside casing 8, and a contact holder 30 holds an internal contact 31 at the housing side. This internal contact 31 is biased downwards by a spring 32, and a compression spring 33 is stretched between the spring stop 29 and the supporting disk 21 to urge the supporting disk 21 downwards. The housing side internal contact 31 is inserted into a conical-shaped opening 34 of the contact holder 30 so as to be retractable upwards.

The supporting disk 21, accordingly, the detecting needle 20 can keep a stable static position by urging three hemispherically-shaped protrusions 23 against the first to third seats 24, 25 and 26 by the compression spring 33. In the illustrated embodiment, there are further used three auxiliary small tension springs 35 shown in Fig. 2 in order that the detecting needle 20 can return to the above static position as positively as possible. Two of three tension springs 35 are located near both sides of the first seat 24 and the remainder is located adjacent the second seat 25 at the side of the third seat 26. Since the hemispherically-shaped protrusions 23 are urged against the seats 24, 25 and 26 by the auxiliary springs 35, the detecting needle 20 can return to the stable static position as positively as possible. In Fig. 2, reference numerals 36 designate sleeves through which the tension springs 35 pass. Both ends of the tension springs 35 are respectively abutted against the supporting disk 21 side and the inside casing bottom plate 10 side by screws 37 and 38.

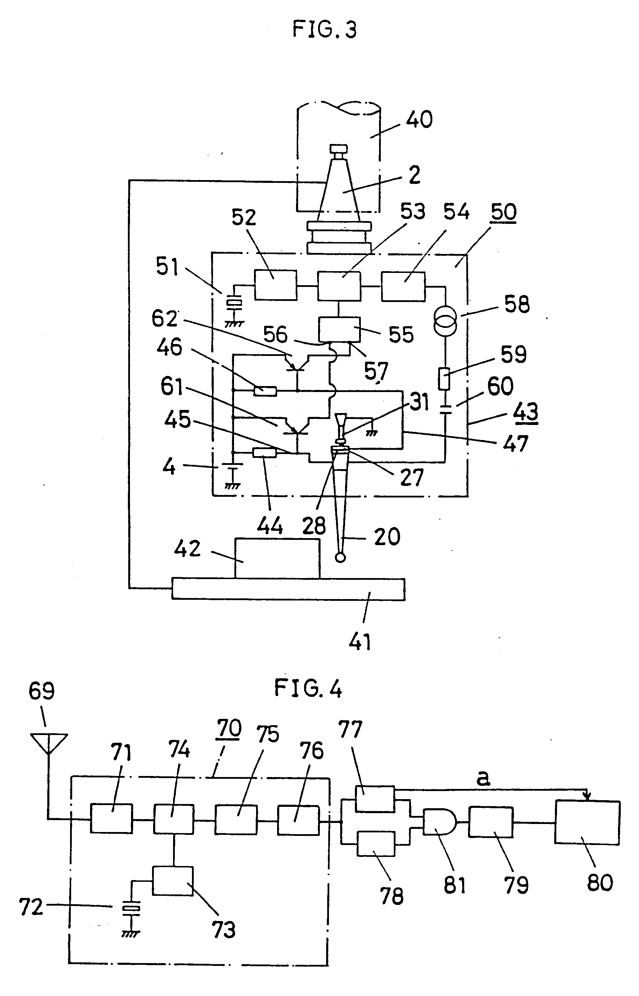

In Fig. 3, reference numeral 40 designates a tool spindle of the machining tool, 41 a table of the machining tool and 42 a work set on the table. Reference numeral 43 generally designates the detecting head shown in Fig. 1. The detecting head 43 is mounted to the tool spindle 40 by means of the shank 2. The shank 2 and the work 42 are electrically conducted through the main body of the machining tool.

The supporting disk 21 is held by the biasing force of the compression spring 33 and the tension springs 35 at the static position and is also movable in the three-dimension against the biasing forces of the springs 33 and 35. The cathode of the battery 4 is grounded through the head housing l of the detecting head 43 while the anode thereof is connected to the detecting needle 20 through a resistor 44 to form the first detecting circuit 45, and is also connected to the contact 27 of the base end portion of the detecting needle through a resistor 46 to form the second detecting circuit 47.

Reference numeral 50 generally designates the transmitter which comprises a crystal oscillator 51, an oscillating circuit 52, a frequency modulating circuit 53, an amplifying circuit 54 and a DTMF (dual tone multi-frequency) circuit 55. In the illustrative embodiment, the DTMF circuit 55 is adapted to produce 16 double scale signals in 4 x 4 combinations of scales selected from two sets of four different kinds of scale groups and produces, when receiving input signals at its signal terminals 56 and 57, double scale signals set at the respective terminals 56 and 57. When the input signals are simultaneously supplied to the terminals 26 and 27, the input signal applied to the terminal 27 overrides the other.

The output from the amplifying circuit 54 is supplied through a mutual inductance 58, a resistor 59 and a capacitor 60 to the detecting needle 20. In other words, the detecting needle 20 itself functions as the antenna for the transmitter 50.

Transistors 61 and 62 are provided to supply detecting signals to the DTMF circuit 55. The bases thereof are connected to the detecting needle 20 and to the contact 27 provided at the base end portion of the detecting needle, the emitters thereof are connected to the anode of the battery 4 and the collectors thereof are connected to the signal terminals 56 and 57 of the DTMF circuit.

In Fig. 4, reference numeral 69 designates a receiving side antenna, and reference numeral 70 generally designates a receiver which comprises a high frequency amplifying circuit, a crystal oscillator 72, a local oscillator circuit 73, a frequency mixing circuit 74, an intermediate frequency amplifying circuit 75 and a demodulating circuit 76. Reference numeral 77 designates a signal discriminating circuit, and the double scale signals the same as those set in the DTMF circuit 55 at the transmitter side are set in this signal discriminating circuit. The signal discriminating circuit produces an output only when the received signal coincides with the thus se double scale signal. Reference numeral 78 designates a delay circuit, 81 an AND gate, 79 an interface circuit and 80 a CNC apparatus for machining tool. In this CNC apparatus there are registered in advance a correcting value for the external contact formed of a pair of the work and the detecting needle and a correcting value for the internal contact formed of the contacts 27 and 31. The correcting values are set in each of the detecting heads 43 used.

The operation of the above apparatus will be described next.

If the work 42 is made of conductive material, when the top of the detecting needle 20 comes in contact with the work 42, the first detecting circuit 45 formed from the anode of the battery 4 through the resistor 44, the detecting needle 20, the work 42, the main body of the machining tool and the shank 2 to the cathode of the battery is closed to flow a current through this circuit. This current causes a potential difference across the resistor 44. The potential difference turns the transistor 61 on and hence a detecting signal is supplied to the first signal terminal 56 of the DTMF circuit 55. This signal is converted into the double scale signal set at the terminal 56 and then fed to the frequency modulating circuit 53, whereby the FM carrier wave from the oscillating circuit 52 is thereby modulated and the modulated signal is amplified by the amplifying circuit 54 and then delivered.

The high frequency signal from the amplifying circuit 54 is supplied through the mutual inductance 58 and the capacitor 60 to the detecting needle 20. At that time, since the detecting needle 20 is in contact with the work 42, the high frequency signal from the amplifying circuit 54 is supplied to the work 42 and the main body of the machining tool, causing the whole of the machining tool to function as an antenna to radiate a radio wave. The radio wave is received by the receiving side antenna 69.

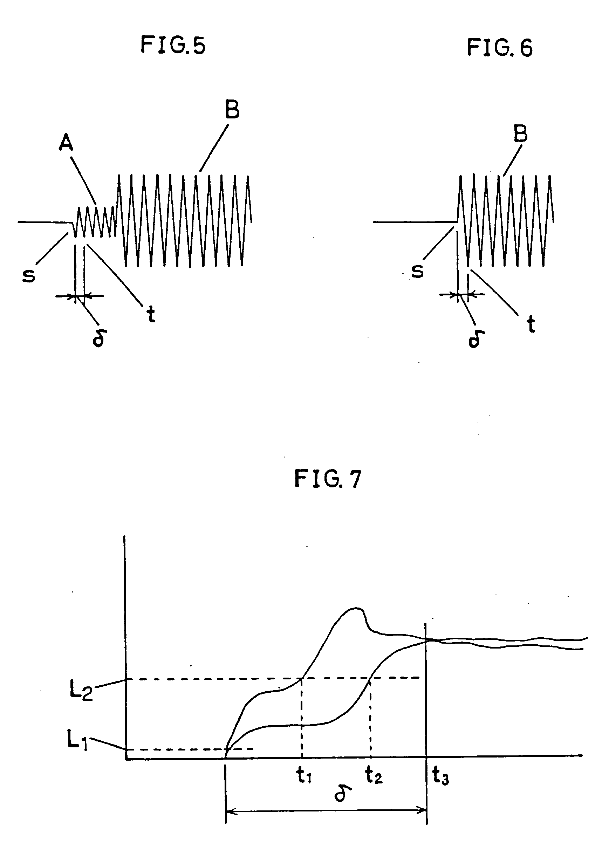

After the detecting needle 20 and the work 42 are brought in contact with each other, the detecting head 43 continues moving to incline the detecting needle 20, whereby the internal contacts 27 and 31 come in contact with each other to permit closings the second detecting circuit 47. Then, a detecting signal is supplied to the second signal terminal 57 of the DTMF circuit 55 and the signal transmitted from the transmitter 50 is converted into the output signal set at the second signal terminal 57. That is, as shown in-Fig. 5, the transmitter 50 delivers the first signal A and then the second signal B.

If on the other hand the work 42 is made of non-conductive material, the external contact formed of the work 42 and the detecting needle 20 does not function so that the transmitter 50 delivers only the second signal B as shown in Fig. 6. The second signal is delivered with a time delay of a certain time period after the work 42 and the detecting needle 20 come in contact with each other.

The output signal in Fig. 5 or 6 is received by the receiver 70. The signal discriminating circuit 77 identifies whether the received signal is the signal shown in Fig. 5 or 6 and then supplies its identifying signal a to the CNC apparatus 80. The delay circuit 78 supplies the detecting signal through the interface circuit 79 to the CNC apparatus 80 so long as the identifying signal a is delivered at a time point t₃ which is behind a time point at which the signal is first detected (time point t₀ in Fig. 7) by a predetermined time δ. The reason that the delay circuit 78 is provided is to remove a signal identifying timing (t₁ or t₂ in Fig. 7) error caused by the difference of the leading edges of the detecting signals as shown in Fig. 7. The delay time δ at that time is corrected by registering this delay time in the CNC apparatus 80 as a correcting value. In Fig. 7, L₁ represents the signal detecting level of the delay circuit 78 and L₂ the signal identifying level of the discriminating circuit 77.

The CNC apparatus 80 incessantly monitors the positions of the tool spindle 40 and the table 41 and controls the same so that when receiving the signal from the interface circuit 79, it latches the positions of the tool spindle 40 and the table 41 at that time point, produces the correcting value registered for the external or internal contact selected by the identifying signal a and calculates the position of the work 42. At that time, the delay time δ is also corrected.

### INDUSTRIAL APPLICABILITY

When the apparatus of this invention is used to detect the position of the work attached to the machining tool, the electrical signal generated by the contact between the contact needle mounted on the tool spindle and the work can be radiated as a radio wave while using the machining tool itself as the antenna by utilizing the above contact. Therefore, irrespective of the positional relationship among the moving detecting needle, the transmitter and the work, the receiver located at the fixed position can always receive the constant and stable signal. Thus, the detecting signal can be transmitted by the radio wave stably and accurately and the cumbersome wiring work for cables becomes unnecessary. Also, there is no risk that the signal transmission is hindered by the directivity of the antenna and its positional relationship relative to the work. In addition, the consumption of the battery at the transmitter side can be reduced.

Further, according to the preferred embodiment of the present invention, the single detecting apparatus can detect the position of the work independently of the conductive or non-conductive material which makes the work. When the internal contact type apparatus is used, its measuring accuracy can be avoided from being lowered as much as possible, and the position of the work can be detected with highest accuracy in accordance with the property of the work.

Furthermore, since the delay circuit is provided in the receiver side and the delay amount thereof is finally corrected by the previously-registered correcting value to calculate the measured value, the error brought about when the signals rise at different timings can be removed, thus making it possible to detect the position more accurately. In addition, since the main spring and the three auxiliary springs are used to place the detecting needle in its static position, the detecting needle can be returned to the static position with high accuracy. The static position of the detecting needle can be fine adjusted by the fine adjustment screw so that the position can be detected with extremely high accuracy.

## Claims

1. A position detector comprising a detecting head (43), a detecting needle (20) made of conductive material and mounted on said detecting head, a radio transmitter (50) housed in said detecting head, and a receiver (70) for receiving a signal transmitted from said radio transmitter, the output from said radio transmitter being coupled to said detecting needle, a detecting circuit which in use is closed by the contact between said detecting needle (20) and said detected object when said object (42) is made of conductive material and a switching element (61 and/or 62) for supplying an operating current to said radio transmitter (50) in response to closure of said detecting circuit, wherein an output of said radio transmitter (50) is coupled through a mutual inductance (58) and a capacitor (60) to said detecting needle (20) which needle functions as an antenna for the transmitter; and a controller (80) for position measurement using the signals received by the receiver (70),
characterized in that: said detecting needle (20) is mounted on said detecting head (43) such as to be freely movable in a three-dimensional manner and is biased to a predetermined static position, said detecting needle being attached in an electrically insulated fashion to a head housing (1); said detecting head (43) has built-in internal contacts (27 and 31) which are closed or opened by the above movement of said detecting needle (20), and a second detecting circuit (47) which is closed by the actuation of said internal contacts; the transmitter (50) is adapted to provide a first detecting signal (A) when said first detecting circuit (45) is closed and a second detecting signal (B) when said second detecting circuit (47) is closed; a signal discriminating circuit (77) is provided to identify whether an output of said receiver (70) contains said first signal (A) and second signal (B) or said second signal (B) alone and to provide an identifying signal (a) to the controller (80) for a position measurement, the controller being adapted to apply to a measured value a different correcting value for correcting said position measurement dependent on the detection of said second detecting signal (B) within a certain time after detection of said first detecting signal (A).

2. A position detector according to claim 1,
wherein said first detecting circuit (45) having said needle as an external contact.

3. A position detector according to claim 1 or 2, wherein said movable detecting needle actuates said internal contacts such that upon contact of an object by the needle the second circuit (47) is closed.

4. A position detector according to any one of claims 1 to 3, wherein a carrier wave for said radio transmitter and receiver is an FM wave.

5. A position detector according to any one of claims 1 to 4, wherein said detecting signal transmitted from said transmitter (50) is a signal modulated by a double scale signal.

## Patentansprüche

1. Positionsdetektor, bestehend aus einem Detektorkopf (43), einer aus leitendem Material bestehenden und an dem Detektorkopf angebrachten Detektornadel (20), einem in dem Detektorkopf vorhandenen Radiosender (50), einem Empfänger (70) zum Empfang eines vom Radiosender gesendeten Signals, wobei das Ausgangssignal des Radiosenders an die Detektornadel gekoppelt ist, einer Detektorschaltung, die bei Benutzung durch den Kontakt zwischen der Detektornadel (20) und einem detektierten Objekt (42) geschlossen wird, wenn das Objekt (42) aus leitendem Material besteht, und einem Schaltelement (61 und/oder 62) zum Zuführen eines Betriebsstromes zum Radiosender (50) in Abhängigkeit vom Schließen der Detektorschaltung, wobei ein Ausgangssignal des Radiosenders (50) durch eine gegenseitige Induktanz (58) und eine Kapazität (16) an die als eine Antenne für den Sender wirkende Detektornadel (20) gekoppelt wird, und einer die vom Empfänger (70) empfangenen Signale verwendenden Steuereinrichtung (80),
**dadurch gekennzeichnet,** daß die Detektornadel (20) dreidimensional frei beweglich an dem Detektorkopf (43) angebracht und in eine vorbestimmte statische Position vorgespannt ist, daß die Detektornadel elektrisch isoliert an einem Kopfgehäuse (1) angebracht ist, daß der Detektorkopf (43) eingebaute interne Kontakte (27 und 31), die durch die Detektornadel (20) geschlossen oder geöffnet werden, und eine zweite Detektorschaltung (47), die durch die Betätigung der internen Kontakte geschlossen wird, aufweist, daß der Sender (50) so ausgebildet ist, daß er ein erstes Detektorsignal (A) abgibt, wenn die erste Detektorschaltung (45) geschlossen wird, und ein zweites Detektorsignal (B) abgibt, wenn die zweite Detektorschaltung (47) geschlossen wird, daß eine Diskriminatorschaltung (77) vorhanden ist, um zu identifizieren, ob ein Ausgangssignal des Empfängers (70) das erste Signal (A) und das zweite Signal (B) oder das zweite Signal (B) allein enthält, und um an die Steuereinrichtung (80) ein Identifizierungssignal (a) für eine Positionsmessung zu geben, wobei die Steuereinrichtung so ausgebildet ist, daß sie einem Meßwert in Abhängigkeit von der Detektion des zweiten Detektorsignals (B) innerhalb einer gewissen Zeit nach Detektion des ersten Detektorsignals (A) einen unterschiedlichen Korrekturwert zur Korrektur der Positionsmessung zuführt.

2. Positionsdetektor nach Anspruch 1, wobei die erste Detektorschaltung (45) die Nadel als externen Kontakt aufweist.

3. Positionsdetektor nach Anspruch 1 oder 2, wobei die bewegliche Detektornadel die internen Kontakte derart betätigt, daß bei einem Kontakt eines Objekts mit der Nadel die zweite Schaltung (47) geschlossen wird.

4. Positionsdetektor bei einem der Ansprüche 1 bis 3, wobei eine Trägerwelle für den Radiosender und -empfänger eine FM-Welle ist.

5. Positionsdetektor nach einem der Ansprüche 1 bis 4, wobei das vom Sender (15) gesendete Detektorsignal ein durch ein Doppelskalasignal moduliertes Signal ist.

## Revendications

1. Détecteur de position comprenant une tête détectrice (43), une aiguille détectrice (20) faite d'une matière conductrice et montée sur ladite tête détectrice, un émetteur radio (50) logé dans ladite tête détectrice, et un récepteur (70) pour recevoir un signal émis à partir dudit émetteur radio, la sortie dudit émetteur radio étant couplée à ladite aiguille détectrice, un circuit détecteur qui en utilisation est fermé par le contact entre ladite aiguille détectrice (20) et ledit objet détecté lorsque ledit objet (42) est fait d'une matière conductrice et un élément de commutation (61 et/ou 62) pour délivrer un courant de mise en oeuvre audit émetteur radio (50) en réponse à la fermeture dudit circuit détecteur, dans lequel une sortie dudit émetteur radio (50) est couplée par l'intermédiaire d'une inductance mutuelle (58) et d'un condensateur (60) à ladite aiguille détectrice (20), laquelle aiguille fonctionne comme une antenne pour l'émetteur ; et une unité de commande (80) pour une mesure de position utilisant les signaux reçus par le récepteur (70),
caractérisé en ce que : ladite aiguille détectrice (20) est montée sur ladite tête détectrice (43) de manière A être librement mobile de façon tridimensionnelle et est rappelée vers une position statique prédéterminée, ladite aiguille détectrice étant fixée d'une façon isolante de l'électricité à un boîtier de tête (1) ; en ce que ladite tête détectrice (43) possède des contacts internes incorporés (27 et 31) qui sont fermés ou ouverts Par le déplacement de ladite aiguille détectrice (20), et un second circuit détecteur (47) qui est fermé par la manoeuvre desdits contacts internes ; en ce que l'émetteur (50) est conçu pour fournir un premier signal de détection (A) lorsque ledit premier circuit de détection (45) est fermé et un second signal de détection (B) lorsque ledit second circuit de détection (47) est fermé ; en ce qu'un circuit de discrimination de signal (77) est prévu pour identifier si une sortie dudit récepteur (70) contient lesdits premier signal (A) et second signal (B) ou ledit second signal (B) seul et pour fournir un signal d'identification (a) à une unité de commande (80) pour une mesure de position, l'unité de commande étant conçue pour appliquer à une valeur mesurée une valeur de correction différente pour corriger ladite mesure de position en fonction de la détection dudit second signal de détection (a) à l'intérieur d'une certaine période de temps après la détection dudit premier signal de détection (A).

2. Détecteur de position selon la revendication 1, dans lequel ledit premier circuit de détection (45) comporte ladite aiguille comme contact externe.

3. Détecteur de position Belon la revendication 1 ou la revendication 2, dans lequel ladite aiguille détectrice mobile actionne lesdits contacts internes de telle manière que lors du contact d'un objet par l'aiguille le second circuit (47) soit fermé.

4. Détecteur de position selon l'une quelconque des revendications 1 à 3, dans lequel une onde porteuse pour lesdits émetteur et récepteur est une onde FM (à modulation de fréquence).

5. Détecteur de position selon l'une quelconque des revendications 1 à 4, dans lequel ledit signal de détection émis par ledit émetteur (50) est un signal modulé par un signal à double gamme.
